# EUROPEAN PATENT SPECIFICATION

(11) **EP 3 846 538 B1**
(45) Date of publication and mention of the grant of the patent: **27.09.2023**
(21) Application number: 19858290.0
(22) Date of filing: 29.08.2019
(51) Int. Cl.: H04W 36/14, H04W 72/12, H04W 76/16, H04M 1/725, H04W 72/1273, H04W 72/20

(54) **METHOD FOR CONTROLLING DISPLAY OF SERVICE IDENTIFIER, AND RELATED PRODUCT**
VERFAHREN ZUR STEUERUNG DER ANZEIGE EINER DIENSTKENNUNG UND ENTSPRECHENDES PRODUKT
PROCÉDÉ PERMETTANT DE COMMANDER UN AFFICHAGE D'IDENTIFIANT DE SERVICE, ET PRODUIT ASSOCIÉ

(30) Priority: 04.09.2018 CN 201811027392
(43) Date of publication of application: 07.07.2021
(73) Proprietor: GUANGDONG OPPO MOBILE TELECOMMUNICATIONS CORP., LTD., Dongguan Guangdong 523860 (CN)
(72) Inventor: ZHANG, Tao, Dongguan, Guangdong 523860 (CN); XIA, Yang, Dongguan, Guangdong 523860 (CN); TANG, Kai, Dongguan, Guangdong 523860 (CN)
(74) Representative: Manitz Finsterwald Patent- und Rechtsanwaltspartnerschaft mbB
(86) International application number: PCT/CN2019/103372
(87) International publication number: WO 2020/048382

(56) References cited:
- CN-A- 101 765 186
- CN-A- 102 595 544
- CN-A- 103 209 460
- CN-A- 103 874 135
- CN-A- 104 581 857
- "3rd Generation Partnership Project; Technical Specification Group Radio Access Network; Study on new radio access technology: Radio access architecture and interfaces (Release 14)", 3GPP STANDARD ; TECHNICAL REPORT ; 3GPP TR 38.801, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V14.0.0, 3 April 2017 (2017-04-03), pages 1-91, XP051298041, [retrieved on 2017-04-03]
- QUALCOMM: "Consideration on the GSMA NR indication require- ments", 3GPP TSG-RAN WG2 Meeting #101 R2-1803664, 2 March 2018 (2018-03-02), XP051400687,
- NEC: "Inter RAT Tight Interworking", 3GPP TSG RAN WG3 meeting #92 R3-161188, 27 May 2016 (2016-05-27), XP051094647,

## Description

### TECHNICAL FIELD

The present disclosure relates to the field of electronic devices, and in particular to a control method for displaying a service identifier in an electronic device, an electronic device, and a computer-readable storage medium.

### BACKGROUND

With the development of the mobile communication technology, users have an increasing demand for communicating using electronic devices such as mobile phones. In the art, while electronic devices are transmitting data, data plane services may be transmitted through a data network, such as the 4^{th} Generation (4G) long-term evolution (LTE) network, whereas telephone service data may still be transmitted through a traditional circuit domain network, such as the 2^{nd} Generation (2G) and the 3^{rd} Generation (3G) networks. The electronic device may display a service identifier on a relevant interface of a local end to indicate a current communication status of the electronic device. With respect to an IMS call service of an IP multimedia subsystem, a display scheme for a service identifier of a downlink data service in a 5G NSA communication system is still not available in the art.

A method for prioritizing frequency bands of a communication network and a communication terminal are disclosed in CN 103209460 A.

### SUMMARY OF THE DISCLOSURE

A control method for displaying a service identifier in an electronic device, an electronic device, and a computer-readable storage medium are provided as set out in the appended set of claims.

According to the present disclosure, the electronic device may send a query request for resource allocation information to the first network device, in response to the electronic device being detected to be in a downlink data service scenario; may receive the resource allocation information from the first network device; and may determine and display a target service identifier of the electronic device based on the resource allocation information. In this way, an actual communication status of the electronic device may be displayed accurately, intuitively and comprehensively, improving comprehensiveness and accuracy of the electronic device displaying information.

### BRIEF DESCRIPTION OF THE DRAWINGS

In order to clearly describe technical solutions in the embodiments of the present application or in the prior art, accompanying drawings for the description of the embodiments or the prior art will be introduced in brief. Obviously, the drawings in the following description are only some embodiments of the present disclosure. Any ordinary skilled in the art may obtain other drawings based on the following drawings without creative work.
FIG. 1 is an exemplary architecture of a wireless communication system according to an embodiment of the present disclosure.
FIG. 2A is a flowchart of a control method for displaying a service identifier in an electronic device according to an embodiment of the present disclosure.
FIG. 2B is a presentative view of displaying a first service identifier on a display interface according to an embodiment of the present disclosure.
FIG. 2C is a presentative view of displaying a second service identifier on a display interface according to an embodiment of the present disclosure.
FIG. 3 is a flowchart of another control method for displaying a service identifier in an electronic device according to an embodiment of the present disclosure.
FIG. 4 is a flowchart of another control method for displaying a service identifier in an electronic device according to an embodiment of the present disclosure.
FIG. 5 is structural schematic view of an electronic device according to an embodiment of the present disclosure.
FIG. 6 is a block diagram of functional units of an apparatus for controlling display of a service identifier according to an embodiment of the present disclosure.

### DETAILED DESCRIPTION

In order to enable the skilled person in the art to better understand technical solutions of the present disclosure, the technical solutions of the embodiments of the present disclosure will be described clearly and completely in combination with the accompanying drawings Obviously, the described embodiments are only a part of, but not all of, the embodiments of the present disclosure. Based on the embodiments in the present disclosure, all other embodiments may be obtained by an ordinary skilled person in the art without creative work, and shall fall within the scope of the present disclosure.

Terms "first", "second", and the like in the description and claims of the present disclosure and in the above-mentioned drawings are used to distinguish different objects, but not to describe a specific order. Furthermore, terms "including", "having" and any variations thereof are intended to suggest non-exclusive inclusion. For example, a process, a method, a system, a product, or a device including a series of operations or units are not limited to the listed operations or units, but alternatively also includes operations or units that are not listed, or also includes other operations or units inherently included in the process, in the method, in the product or in the device.

An "embodiment" mentioned in the present disclosure may refer to a particular feature, a structure, or a property described in connection with the embodiment being included in at least one embodiment of the present disclosure. The term occurring in various sections of the specification may not refer to a same embodiment, or an embodiment that is independent from, alternative to, or mutually exclusive with other embodiments. Skilled person in the art shall understand that the embodiments described herein may be combined with other embodiments.

The electronic device involved in the embodiments of the present disclosure may be an electronic device capable of transmitting data. The electronic device may include various devices with wireless communication functions, such as a handheld device, a vehicle-mounted device, a wearable device, a computing device, or a wireless modem, and user equipment (UE) in various forms, a mobile station (MS), a terminal device, and so on. The embodiments of the present disclosure will be described in detail below.

The technical solutions of the embodiments of the present disclosure may be applied to various communication systems. The communication systems may include, but are not limited to, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, a LTE Frequency Division Duplex (FDD) system, a LTE Time Division Duplex (TDD), a Universal Mobile Telecommunication System (UMTS), a Worldwide Interoperability for Microwave Access (WiMAX) communication system or a 5G new radio (NR) and so on. In detail, the technical solutions in the embodiments of the present disclosure may be applied to eMBB services under the Option 7a architecture or ultra reliable low latency communications (URLLC).

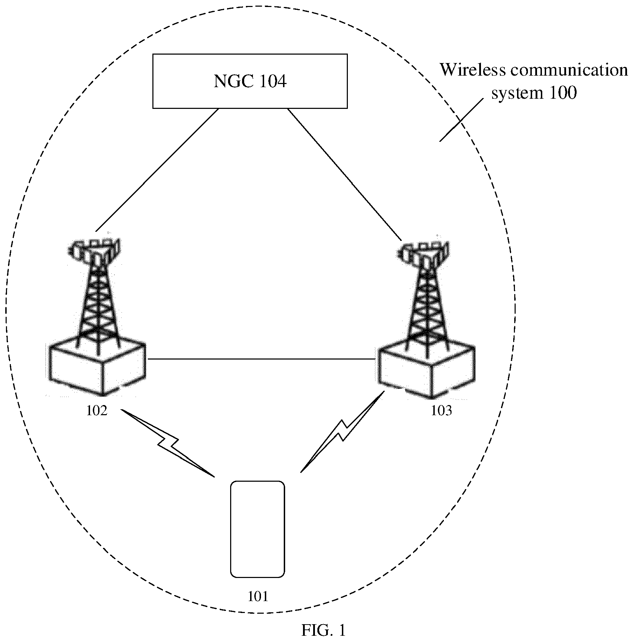

As shown in FIG. 1, FIG. 1 is an exemplary architecture of a wireless communication system 100 provided by an embodiment of the present disclosure. The wireless communication system 100 of the present embodiment may include: an electronic device 101, a 4G base station 102, a 5Gbase station 103, and a 5G core network device 104. A network accessed by the electronic device 101 may be a 5G non-standalone (NSA) network. A control plane signaling may be transmitted through the base station 102. User plane data of the electronic device may be transmitted to the core network device NGC104 through the base station 102 and the base station 103 respectively. The base station 103 may be communicatively connected to the core network device 104. The core network device NGC104 may support a dual connection mode. The electronic device 101 specifically may maintains a communicative connection with the base station 102 and the base station 103 at the same time in the dual connection mode, and a data transmission service may be achieved through the network. In addition, in the network, the next generation core network (NGC) may replace the evolved packet core (EPC). In this way, a risk of a core network signaling being overloaded may be solved, and the electronic device may achieve voice call services, such as an eMBB service, through the network.

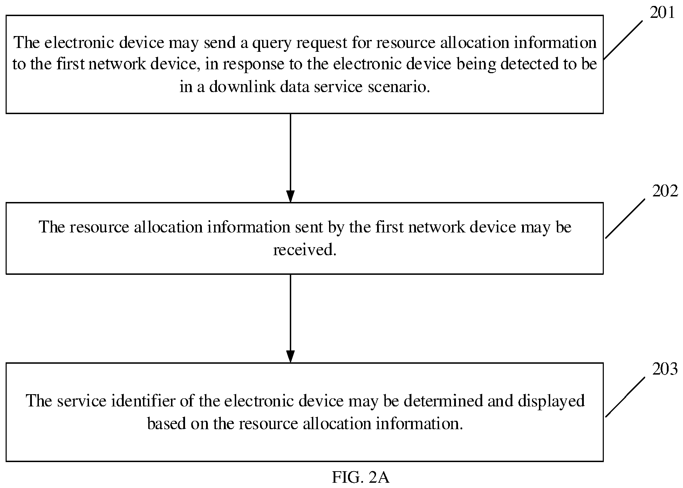

As shown in FIG. 2A, FIG. 2A is a flowchart of a control method for displaying a service identifier in an electronic device according to an embodiment of the present disclosure. The method may be applied in the electronic device shown in FIG. 1. The electronic device may support the eMBB service and the dual connection mode. In the dual connection mode, the electronic device may establish a first communication connection with a first network device and establish a second communication connection with a second network device. Each of the first network device and the second network device may be a network device in a 5G NSA network. The first network device may be a fourth-generation (4G) base station eNB. The second network device may be a 5G base station gNB. A core network of the 5G NSA network may be the NGC. The first network device may be communicatively connected to the second network device, and the first network device may be communicatively connected to the NGC. As shown in FIG. 2A, the control method for displaying the service identifier may include following operations.

In an operation 201, the electronic device may send a query request for resource allocation information to the first network device, in response to the electronic device being detected to be in a downlink data service scenario.

In the present embodiment, the electronic device may detect the service scenario of the electronic device. The electronic device may send the query request for resource allocation information in response to the electronic device being detected to be in the downlink data service scenario. Considering that the control plane signaling may be transmitted through the eLTE base station, the query request for resource allocation information may be sent to the first network device. The downlink data service may refer to the electronic device receiving data sent by the eNB or the gNB.

In an operation 202, the resource allocation information sent by the first network device may be received.

The resource allocation information may include at least one of: a network resource block, a file size, an available downlink bandwidth, etc. In the present embodiment, after receiving the query request for resource allocation information, the first network device may send first resource allocation sub-information corresponding to the first network device to the electronic device. The first resource allocation sub-information may include the file size and the available downlink bandwidth corresponding to the first network device. The first network device may also forward the query request for resource allocation information to the second network device, and receive second resource allocation sub-information sent by the second network device. The second resource allocation sub-information may include a first network resource block of the second network device, a file size of the second network device, and an available downlink bandwidth of the second network device. Subsequently, the first network device may send the second resource allocation sub-information to the electronic device. The first resource allocation sub-information may carry a first device identifier of the first network device, and the second resource allocation sub-information may carry a second device identifier of the second network device. In this way, the electronic device may distinguish the first resource allocation sub-information and the second resource allocation sub-information based on the first device identifier and the second device identifier.

In an operation 203, a target service identifier of the electronic device may be determined based on the resource allocation information, and the target service identifier may be displayed.

The service identifier may be configured to indicate a form of the service data being transmitted under each of various network architectures. For example, in the 4G LTE network, the electronic device may display an icon "VoLTE" on a calling interface in the downlink data service. The identifier "VoLTE" may be configured to indicate that the electronic device may support the downlink data service through the 4G LTE network. In detail, the service data of the downlink data service may be transmitted through the 4G LTE network.

The service identifier may be at least one of: NR, uRLLC, 4G, 5G, etc., which will not be limited herein.

Alternatively, the resource allocation information may include the first network resource block of the second network device. In the operation 103, determining and displaying the target service identifier of the electronic device based on the resource allocation information, may include following operations.

In an operation 31, in response to the first network resource block being less than a first threshold, a channel quality indicator of the second network device may be determined.

In an operation 32, in response to the channel quality indicator being less than a second threshold, the target service identifier may be determined as a first service identifier, and the first service identifier may be displayed on a display interface of the electronic device. In response to the channel quality indicator being greater than the second threshold, the target service identifier may be determined as a second service identifier, and the second service identifier may be displayed on the display interface of the electronic device. The first service identifier and the second service identifier may indicate transmission form of service data in different network architectures.

The electronic device may preset the first threshold for the network resource block and the second threshold for the channel quality indicator. A threshold may refer to a size of the network resource block, for example, the first threshold may refer to a size of a maximal network resource block. For example, the first threshold may be 100, and the second threshold may be 10. After the first network resource block is determined, it may be determined whether the first network resource block is less than the first threshold. In response to the first network resource block being less than the first threshold, the channel quality indicator of the second network device may further be determined.

Alternatively, the above-mentioned first network resource block is sent from the second network device to the first network device, in response to the query request is forwarded from the first network device to the second network device.

Alternatively, determining the channel quality indicator of the second network device may include following operations.

In an operation A1, a channel parameter and signal strength of the second network device may be acquired.

In an operation A2, the channel quality indicator of the second network device may be determined based on the channel parameter and the signal strength.

The channel parameter may include at least one of: a transmission rate, a signal-to-noise ratio, channel gain, and a noise power. In the present embodiment, the channel quality indicator may be determined based on the channel parameter and the signal strength. In response to the channel quality indicator being less than the second threshold, the target service identifier may be determined as the first service identifier, the first service identifier may be displayed on the display interface of the electronic device. In response to the channel quality indicator being greater than the second threshold, the target service identifier may be determined as the second service identifier, and the second service identifier may be displayed on the display interface of the electronic device. The first service identifier and the second service identifier may indicate transmission form of service data in different network architectures.

Alternatively, the first service identifier may be a 4G icon indicating transmission form of service data in 4G network, and the second service identifier may be a 5G icon indicating transmission form of service data in 5G network.

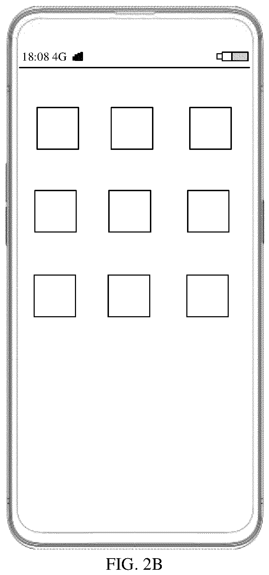

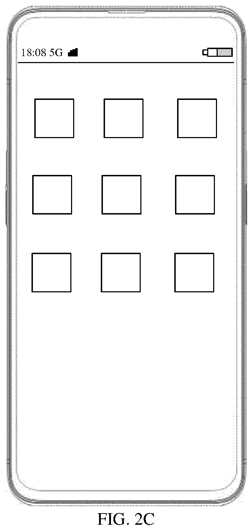

As shown in FIGS. 2B to 2C, FIG. 2B is a presentative view of displaying the first service identifier on the display interface according to an embodiment of the present disclosure. As shown in FIG. 2B, the first service identifier may be the "4G" icon. FIG. 2C is a presentative view of displaying the second service identifier on the display interface according to an embodiment of the present disclosure. As shown in FIG. 2C, the second service identifier may be the "5G" icon.

Alternatively, the resource allocation information may include a first available downlink bandwidth of the first network device and a second available downlink bandwidth of the second network device, and determining the target service identifier of the electronic device based on the resource allocation information may include following operations.

The target service identifier of the electronic device may be determined based on the first available downlink bandwidth and the second available downlink bandwidth.

The electronic device may compare the first available downlink bandwidth with the second available downlink bandwidth after obtaining the first available downlink bandwidth and the second available downlink bandwidth. In response to the first available downlink bandwidth being greater than the second available downlink bandwidth, the target service identifier may be determined as the first service identifier, and the first service identifier may be displayed on the display interface of the electronic device. In response to the first available downlink bandwidth being less than the second available downlink bandwidth, the target service identifier may be determined as the second service identifier, and the second service identifier may be displayed on the display interface of the electronic device. The first service identifier and the second service identifier may indicate transmission form of service data in different network architectures.

In order to display the service identifier on the display interface of the electronic device, a service interface of the downlink data service may be determined firstly, correspondence between a pre-configured service interface and a display position of the service identifier may be enquired, and a target display position corresponding to the service interface of the downlink data service may be determined. Subsequently, the service identifier may be displayed at the target display position. In a specific implementation, a preset display position of the service identifier may be variable for various types of service interfaces. For example, on an interface of a calling state, the service identifier may be displayed at an upper left corner of the interface. In another example, in an application interface of another application, the service identifier may be displayed at an upper middle portion of the interface. In this way, the electronic device may flexibly adjust and adapt the display position of the service identifier on a current service interface for each of various types of service interfaces of the downlink data service, such that the electronic device may have higher flexibility and intelligence for displaying the service identifier.

Alternatively, in the present embodiment, before the electronic device sends the query request for resource allocation information to the first network device, the method further includes: in response to the electronic device detecting a switch-on event, performing a switch-on registration process, receiving network description information of the 5G NSA network sent from the first network device, and determining a set of service identifiers of the electronic device based on the network description information, and the set of service identifiers may include the target service identifier. The network description information may include at least a type and a capability of the NGC network.

A service identifier set may include following identifiers: 4G VoLTE, VoLTE, and VoNR. The 4G VoLTE may be configured to indicate that the downlink data service is supported by an EPC in the 5G NSA system. The VoLTE may be configured to indicate that the downlink data service is supported by the NGC and 4G access network in the 5G NSA system cooperatively (specifically, the data may be transmitted from the 4G access network to the core network NPC, or from a 5G access network to the 4G access network and further to the core network NPC). The VoNR may be configured to indicate that the downlink data service is supported by the NGC in the 5G NSA system.

In a specific implementation, while the electronic device is performing the switch-on registration process, the network side may determine a type of the base station that the electronic device accesses, and a cell at which the electronic device currently resides, i.e. the network side may determine that the network accessed by the electronic device is the 5G NSA network. Subsequently, the network side may send a type and a capability of a core network device of the network to the electronic device. The type may include EPC and/or NGC, and the capability may include whether an IMS voice service is supported. In addition, the service identifier set may include correspondence between the network description information and the service identifier of the downlink data service. In this way, the electronic device may complete configuration of the service identifier of the downlink data service quickly during the switch-on registration process. In this way, in a subsequent process of enabling the downlink data service, in response to an accessed service operator remaining unchanged, the service identifier may be displayed based on the pre-configured service identifier directly, so as to improve an efficiency and accuracy of the electronic device displaying the service identifier.

It may be seen that, in the present embodiment, in response to the electronic device being detected to be in the downlink data service scenario, the electronic device may send the query request for resource allocation information to the first network device, receive the resource allocation information sent by the first network device, determine and display the target service identifier of the electronic device based on the resource allocation information. In this way, as the electronic device is maintained in the dual connection mode, the form for transmitting the service data may be selected flexibly based on the resource allocation information of the network device, such that the efficiency and stability of data transmission may be improved, and the actual communication status of the electronic device may be displayed accurately, intuitively and comprehensively, improving comprehensiveness and accuracy of the electronic device displaying information.

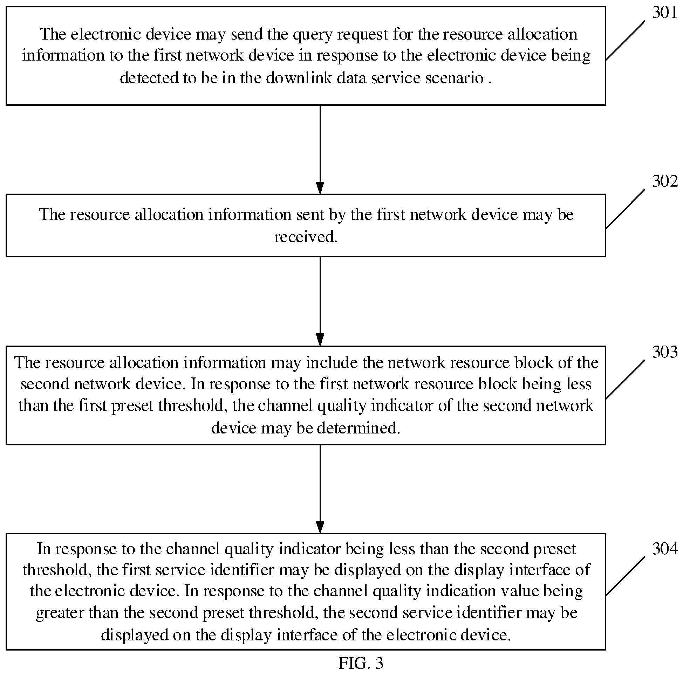

In conformity with the embodiment shown in FIG. 2A, as shown in FIG. 3, FIG. 3 is a flowchart of a control method for displaying a service identifier in an electronic device according to an embodiment of the present disclosure. The method may be applied in the electronic device shown in FIG. 1. The electronic device may support the eMBB service and the dual connection mode. In the dual connection mode, the electronic device may establish a first communication connection with a first network device and establish a second communication connection with a second network device. Each of the first network device and the second network device may be a network device in a 5G NSA network. The first network device may be a fourth-generation (4G) base station eNB. The second network device may be a 5G base station gNB. A core network of the 5G NSA network may be the NGC. The first network device may be communicatively connected to the second network device, and the first network device may be communicatively connected to the NGC. As shown in FIG. 3, the present control method for displaying the service identifier may include following operations.

In an operation 301, in response to the electronic device being detected to be in the downlink data service scenario, the electronic device may send the query request for resource allocation information to the first network device.

In an operation 302, the resource allocation information sent by the first network device may be received.

In an operation 303, the resource allocation information may include the first network resource block of the second network device. In response to the first network resource block being less than the first threshold, the channel quality indicator of the second network device may be determined.

In an operation 304, in response to the channel quality indicator being less than the second threshold, the target service identifier may be determined as the first service identifier, and the first service identifier may be displayed on the display interface of the electronic device. In response to the channel quality indicator being greater than the second threshold, the target service identifier may be determined as the second service identifier, and the second service identifier may be displayed on the display interface of the electronic device. The first service identifier and the second service identifier may indicate transmission form of service data in different network architectures.

It may be seen that, in the present embodiment, in response to the electronic device being detected to be in the downlink data service scenario, the electronic device may send the query request for resource allocation information to the first network device, and receive the resource allocation information sent by the first network device. The resource allocation information may include the first network resource block of the second network device. In response to the first network resource block being less than the first threshold, the electronic device may determine the channel quality indicator of the second network device. In response to the channel quality indicator being less than the second threshold, the target service identifier may be determined as the first service identifier, and the first service identifier may be displayed on the display interface of the electronic device. In response to the channel quality indicator being greater than the second threshold, the target service identifier may be determined as the second service identifier, and the second service identifier may be displayed on the display interface of the electronic device. The first service identifier and the second service identifier may indicate transmission form of service data in different network architectures. In this way, as the electronic device maintains the dual connection mode, the form for transmitting the service data may be selected flexibly based on the resource allocation information of the network device, the efficiency and stability of data transmission may be improved, and the actual communication status of the electronic device may be displayed accurately, intuitively and comprehensively, such that comprehensiveness and accuracy of the electronic device displaying information may be improved.

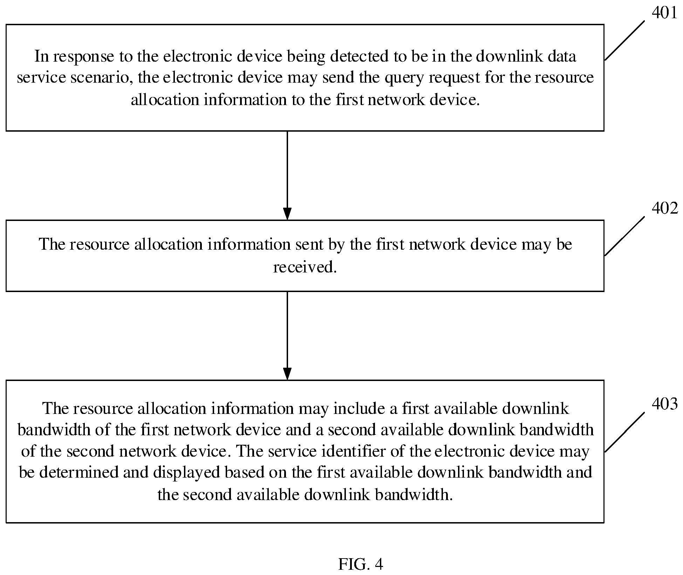

In conformity with the embodiment shown in FIG. 2A, as shown in FIG. 4, FIG. 4 is a flowchart of a control method for displaying a service identifier according to an embodiment of the present disclosure. The method may be applied in the electronic device. The electronic device may support the eMBB service and the dual connection mode. In the dual connection mode, the electronic device may establish a first communication connection with a first network device and establish a second communication connection with a second network device. Each of the first network device and the second network device may be a network device in a 5G NSA network. The first network device may be a fourth-generation (4G) base station eNB. The second network device may be a 5G base station gNB. A core network of the 5G NSA network may be the NGC. The first network device may be communicatively connected to the second network device, and the first network device may be communicatively connected to the NGC. As shown in FIG. 4, the control method for displaying the service identifier may include following operations.

In an operation 401, in response to the electronic device being detected to be in the downlink data service scenario, the electronic device may send the query request for resource allocation information to the first network device.

In an operation 402, the resource allocation information sent by the first network device may be received.

In an operation 403, the resource allocation information may include the first available downlink bandwidth of the first network device and the second available downlink bandwidth of the second network device. The target service identifier of the electronic device may be determined and displayed based on the first available downlink bandwidth and the second available downlink bandwidth.

It can be seen that, in the present embodiment, in response to the electronic device being detected to be in the downlink data service scenario, the electronic device may send the query request for resource allocation information to the first network device, and receive the resource allocation information sent by the first network device. The resource allocation information may include the first available downlink bandwidth of the first network device and the second available downlink bandwidth of the second network device. The electronic device may determine and display the target service identifier of the electronic device based on the first available downlink bandwidth and the second available downlink bandwidth. In this way, the electronic device maintains the dual connection mode, and therefore, the electronic device may flexibly select the form for transmitting the service data based on the resource allocation information of the network device, improving the efficiency and stability of data transmission, and the actual communication status of the electronic device may be shown accurately, intuitively and comprehensively, improving the comprehensiveness and accuracy of information displayed by electronic device.

In addition, as the electronic device maintains the dual connection mode, the electronic device may flexibly select the form for transmitting service data based on the channel quality, thereby improving the efficiency and stability of data transmission.

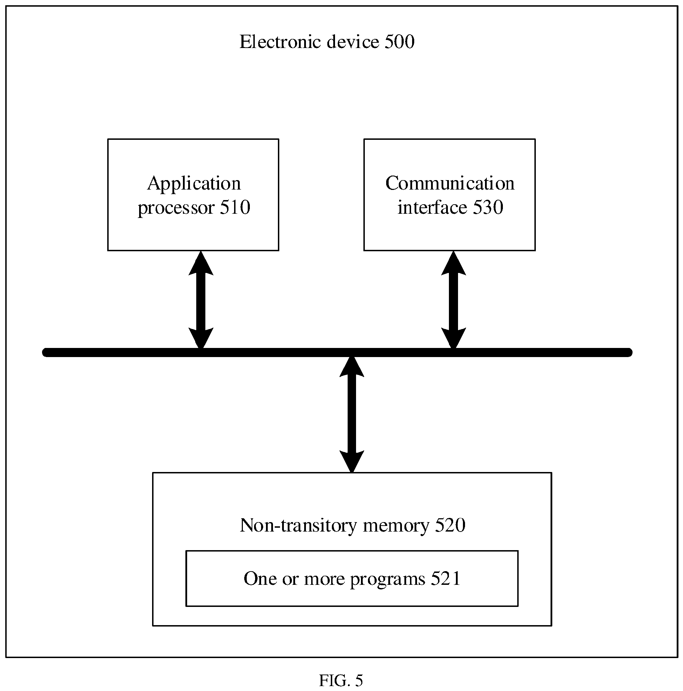

In conformity with the embodiments shown in FIGS. 2A, 3, and 4, as shown in FIG. 5, FIG. 5 is a structural schematic view of an electronic device according to an embodiment of the present disclosure. As shown in the figure, the embodiment may be applied in the electronic device 500. The electronic device may support the eMBB service and the dual connection mode. In the dual connection mode, the electronic device may establish a first communication connection with a first network device and establish a second communication connection with a second network device. Each of the first network device and the second network device may be a network device in a 5G NSA network. The first network device may be a fourth-generation (4G) base station eNB. The second network device may be a 5G base station gNB. A core network of the

5G NSA network may be the NGC. The first network device may be communicatively connected to the second network device, and the first network device may be communicatively connected to the NGC. The electronic device 500 may include an application processor 510, a non-transitory memory 520, a communication interface 530, and one or more programs 521. The one or more programs 521 may be stored in the non-transitory memory 520 and may be configured to be processed by the application processor 510. The one or more programs 521 may include instructions for performing following operations.

In response to the electronic device being detected to be in the downlink data service scenario, the electronic device may send the query request for resource allocation information to the first network device.

The resource allocation information sent by the first network device may be received.

The target service identifier of the electronic device may be determined based on the resource allocation information, and the target service identifier may be displayed.

It may be seen that, in the present embodiment, in response to the electronic device being detected to be in the downlink data service scenario, the electronic device may send the query request for resource allocation information to the first network device, receive the resource allocation information sent by the first network device, determine the target service identifier of the electronic device based on the resource allocation information, and display the target service identifier. In the downlink data service scenario, the electronic device may select the corresponding service identifier based on the resource allocation information of the network device of the access network, such as displaying the 4G icon or the 5G icon, such that the actual data status of the electronic device in the service process may be displayed accurately, intuitively and comprehensively, improving the comprehensiveness and accuracy of information displayed by the electronic device.

In one embodiment, while determining and displaying the target service identifier of the electronic device based on the resource allocation information, the programs may include instructions for performing following operations.

In response to the first network resource block being less than the first threshold, the channel quality indicator of the second network device may be determined.

In response to the channel quality indicator being less than the second threshold, the target service identifier may be determined as the first service identifier, and the first service identifier may be displayed on the display interface of the electronic device. In response to the channel quality indicator being greater than the second threshold, the target service identifier may be determined as the second service identifier, and the second service identifier may be displayed on the display interface of the electronic device. The first service identifier and the second service identifier may indicate transmission form of service data in different network architectures.

In one embodiment, while determining the channel quality indicator of the second network device, instructions in the programs may be configured to perform following operations. The channel parameter and signal strength of the second network device may be acquired.

The channel quality indicator of the second network device may be determined based on the channel parameter and the signal strength.

In one embodiment, the first service identifier may be the 4G icon indicating transmission form of service data in 4G network, and the second service identifier may be the 5G icon indicating transmission form of service data in 5G network.

In one embodiment, the channel parameter may include at least one of: the transmission rate, the signal-to-noise ratio, the channel gain, and the noise power.

In one embodiment, the first network resource block is sent from the second network device to the first network device, in response to the query request is forwarded from the first network device to the second network device.

In one embodiment, the resource allocation information may include the first available downlink bandwidth of the first network device and the second available downlink bandwidth of the second network device. While determining the target service identifier of the electronic device based on the resource allocation information, the program may include instructions for performing operations of: determining the target service identifier of the electronic device based on the first available downlink bandwidth and the second available downlink bandwidth.

In one embodiment, before sending query request for resource allocation information to the first network device, a processing unit may further be configured to perform following operations. The switch-on registration process may be executed in response to the switch-on event being detected.

The network description information of the 5G NSA network sent from the first network device may be received, and the network description information may include at least the type and the capability of the NGC network.

The target service identifier of the electronic device may be determined based on the network description information.

The above description mainly introduces the technical solution of the embodiments of the present disclosure from the perspective of an execution process of the method. It should be understood that in order to implement the above-mentioned functions, the electronic device may include corresponding hardware structures and/or software modules for performing each function. Those skilled in the art should easily realize that in combination with the exemplary units and algorithm operations in the embodiments provided herein, the present disclosure may be implemented in the form of hardware or a combination of hardware and computer software. Whether a certain function is achieved by hardware or by computer software-driven hardware may be determined depending on a specific application and a design constraint of the technical solution. Professionals may use different methods for each specific application to implement the described functions, but such implementation should not be considered beyond the scope of the present disclosure.

The embodiments of the present disclosure may divide the electronic device into functional units based on the above-mentioned examples of the method. For example, the electronic device may be divided to obtain each functional unit corresponding to each function, or two or more functions may be integrated into one processing unit. The above-mentioned integrated unit may be achieved in the form of hardware or software functional unit. It should be noted that the division into units in the embodiments of the present disclosure is exemplary, and is only a type of logical function division. There may be other division methods in actual implementations.

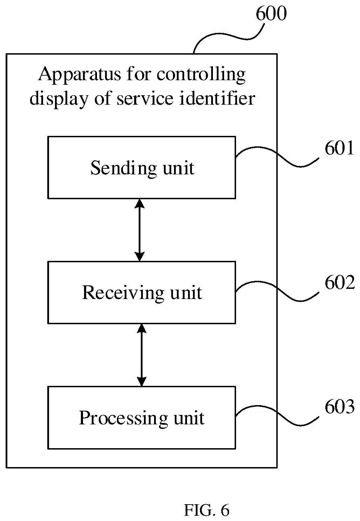

FIG. 6 is a block diagram of the functional unit composition of an apparatus 600 for controlling the display of the service identifier involved in the embodiments of the present disclosure. The apparatus 600 for controlling the display of the service identifier may be applied in an electronic device. The electronic device may support the eMBB service and the dual connection mode. In the dual connection mode, the electronic device may establish a first communication connection with a first network device and establish a second communication connection with a second network device. Each of the first network device and the second network device may be a network device in a 5G NSA network. The first network device may be a fourth-generation (4G) base station eNB. The second network device may be a 5G base station gNB. A core network of the 5G NSA network may be the NGC. The first network device may be communicatively connected to the second network device, and the first network device may be communicatively connected to the NGC. The apparatus 600 for controlling the display of the service identifier may include a sending unit 601, a receiving unit 602, and a processing unit 603.

The sending unit 601 may be configured to send the query request for resource allocation information to the first network device in response to the electronic device being detected to be in the downlink data service scenario.

The receiving unit 602 may be configured to receive the resource allocation information sent by the first network device.

The processing unit 603 may be configured to determine and display the target service identifier of the electronic device based on the resource allocation information.

It may be seen that, in the present embodiment, in response to the electronic device being detected to be in the downlink data service scenario, the electronic device may send the query request for resource allocation information to the first network device, receive the resource allocation information sent by the first network device, determine and display the target service identifier of the electronic device based on the resource allocation information. In the downlink data service scenario, the electronic device may select the corresponding service identifier based on the resource allocation information of the network device of the access network, such as displaying the 4G icon or the 5G icon, such that the actual data status of the electronic device in the service process may be displayed accurately, intuitively and comprehensively, improving the comprehensiveness and accuracy of information displayed by the electronic device.

In one embodiment, the resource allocation information may include the first network resource block of the second network device. While determining and displaying the target service identifier of the electronic device based on the resource allocation information, the processing unit 603 may specifically be configured to perform following operations.

In response to the first network resource block being less than the first threshold, the channel quality indicator of the second network device may be determined.

In response to the channel quality indicator being less than the second threshold, the target service identifier may be determined as the first service identifier, and the first service identifier may be displayed on the display interface of the electronic device. In response to the channel quality indicator being greater than the second threshold, the target service identifier may be determined as the second service identifier, and the second service identifier may be displayed on the display interface of the electronic device. The first service identifier and the second service identifier may indicate transmission form of service data in different network architectures.

In one embodiment, while determining the channel quality indicator of the second network device, the processing unit 603 may specifically be configured to perform following operations.

The channel parameter and the signal strength of the second network device may be acquired.

The channel quality indicator of the second network device may be determined based on the channel parameter and the signal strength.

In one embodiment, the first service identifier may be the 4G icon indicating transmission form of service data in 4G network, and the second service identifier may be the 5G icon indicating transmission form of service data in 5G network.

In one embodiment, the first network resource block is sent from the second network device to the first network device, in response to the query request is forwarded from the first network device to the second network device.

In one embodiment, the resource allocation information may include the first available downlink bandwidth of the first network device and the second available downlink bandwidth of the second network device. While determining the target service identifier of the electronic device based on the resource allocation information, the processing unit 603 may specifically be configured to: determine target the service identifier of the electronic device based on the first available downlink bandwidth and the second available downlink bandwidth.

The embodiments of the present disclosure may further provide a non-transitory computer storage medium. The non-transitory computer storage medium may store a computer program for exchange electronic data. The computer program enables a computer to execute a part or all of the operations of any method as described in the above method embodiments, and the computer may include an electronic device.

The embodiments of the present disclosure also provide a computer program product. The computer program product may include a non-transitory computer-readable storage medium storing a computer program. The computer program is operable to enable a computer to execute a part or all of the operations of any method as described in the above method embodiments. The computer program product may be a software installation package, and the computer may include an electronic product.

It should be illustrated that, in order to provide a concise description for the foregoing method embodiments, the embodiments are all expressed as a series of action combinations, but those skilled in the art should know that the present disclosure is not limited by the described sequence of actions, because according to the present disclosure, some operations may be performed in another order or simultaneously. Further, those skilled in the art should also be aware that the embodiments described in the specification are all preferred embodiments, and the involved actions and modules may not be necessary for the present disclosure.

In the above embodiments, the description of each embodiment has its own emphasis. Parts that are not described in detail in one embodiment may refer to related descriptions in other embodiments.

In the embodiments provided in the present disclosure, it should be understood that the disclosed apparatus may be implemented by other means. For example, the apparatus embodiments described above are merely illustrative. For example, the above-mentioned division of the units is only a type of logical function division, and there may be other types of division in actual implementation, for example, multiple units or components may be combined or integrated into another system, or some features may be omitted or not implemented. Further, the described or discussed mutual coupling or direct coupling or communicative connection may be achieved through some interfaces, indirect coupling or communicative connection. The connection and coupling of devices or units may be in electrical or other forms.

The units described above as separate components may or may not be physically separated, and the components displayed as units may or may not be physical units. That is, they may be located in one place, or they may be distributed on multiple network units. Some or all of the units may be selected according to actual needs to achieve the objectives of the solutions of the embodiments.

In addition, various functional units in the various embodiments of the present disclosure may be integrated into one processing unit. Alternatively, each unit may exist alone physically. Alternatively, two or more units may be integrated into one unit. The above-mentioned integrated unit may be achieved in the form of hardware or software functional unit.

When the above integrated unit is implemented in the form of a software functional unit and sold or used as an independent product, the unit may be stored in a non-transitory computer readable memory. In this way, the essence of the technical solution of the present disclosure, or the part of the technical solution of the present disclosure that contributes to the art, or all or a part of the technical solution of the present disclosure may be achieved in the form of a software product. The computer software product may be stored in a non-transitory memory and include a number of instructions to enable a computer device (which may be a personal computer, a server, or a network device, etc.) to perform all or a part of the operations of the above-mentioned methods of the various embodiments of the present disclosure. The above-mentioned non-transitory memory may include: a universal serial bus disk, a read-only memory (ROM), a random access memory (RAM), a mobile hard drive, a magnetic disk, or an optical disk and other media that can store program codes.

Those ordinary skilled in the art should understand that all or a part of the operations in the various methods of the embodiments may be completed by a program instructing relevant hardware. The program may be stored in the computer-readable non-transitory memory, and the non-transitory memory may include: a flash disk, the Read-only memory (ROM), the random access memory (RAM), the magnetic disk or the optical disk, etc.

The embodiments of the present disclosure are described in detail, and specific examples are used in the specification to illustrate principles and implementation of the present disclosure. The descriptions of the above embodiments are used to facilitate the understanding of the methods and essential concept of the present disclosure. Based on the concept of the present disclosure, any ordinary skilled in the art may perform modification in the specific implementation and the scope of application. In summary, the content of the specification should not be understood as a limitation to the present disclosure.

## Claims

1. A control method for displaying a service identifier in an electronic device, the electronic device supporting a dual connection mode in which the electronic device is capable of establishing a first communication connection with a first network device, and is capable of establishing a second communication connection with a second network device, each of the first network device and the second network device being a network device in a first fifth generation 5G non-standalone NSA network, the first network device being a fourth generation 4G base station eNB; the second network device being a fifth generation 5G base station gNB; a core network of the first 5G NSA network being a next generation core network NGC, the first network device being in a communication connection with the second network device, and the first network device being in a communication connection with the NGC, the control method comprising:
sending (201) a query request for resource allocation information to the first network device, in response to the electronic device being detected to be in a downlink data service scenario;
receiving (202) the resource allocation information from the first network device; and
determining and displaying (203) a target service identifier of the electronic device based on the resource allocation information;
wherein the resource allocation information comprises a first network resource block of the second network device; the determining and displaying (203) a target service identifier of the electronic device based on the resource allocation information, comprises:
determining (303) a channel quality indicator of the second network device, in response to the first network resource block being less than a first threshold;
determining the target service identifier as a first service identifier corresponding to the first network device and displaying (304) the first service identifier on a display interface of the electronic device, in response to the channel quality indicator being less than a second threshold; and
determining the target service identifier as a second service identifier corresponding to the second network device and displaying the second service identifier on the display interface of the electronic device, in response to the channel quality indicator being greater than the second threshold.

2. The method according to claim 1, wherein the determining (303) a channel quality indicator of the second network device comprises:
acquiring a channel parameter and signal strength of the second network device; and
determining the channel quality indicator of the second network device based on the channel parameter and the signal strength.

3. The method according to claim 1 or claim 2, wherein the first service identifier is a 4G icon indicating transmission form of service data in 4G network, and the second service identifier is a 5G icon indicating transmission form of service data in 5G network.

4. The method according to claim 2, wherein the channel parameter comprises at least one of: a transmission rate, a signal-to-noise ratio, channel gain, and a noise power.

5. The method according to any one of claims 1 to 4, wherein the first network resource block is sent from the second network device to the first network device, in response to the query request being forwarded from the first network device to the second network device.

6. The method according to any one of claims 1 to 5, wherein the resource allocation information comprises at least one of: a network resource block, a file size, and an available downlink bandwidth.

7. The method according to claim 1, prior to the sending (201) a query request for resource allocation information to the first network device, further comprising:
performing a switch-on registration process in response to a switch-on event, receiving network description information of the 5G NSA network sent from the first network device, wherein the network description information comprises at least a type and a capability of the NGC network; and
determining a set of service identifiers of the electronic device based on the network description information, the set of service identifiers comprises the target service identifier.

8. An electronic device (500), **characterized by** comprising a processor (510), a memory (520), a communication interface (530), and one or more programs, wherein the one or more programs are stored in the memory (520) and are configured to be executed by the processor (510), and the programs comprise an instruction for performing the operations of the method according to any one of claims 1 to 8.

9. A computer-readable storage medium, configured to store a computer program for exchanging electronic data, **characterized in that** the computer program enables a computer to execute the method according to any one of claims 1 to 8.

## Patentansprüche

1. Steuerverfahren zum Anzeigen einer Dienstkennung in einer elektronischen Vorrichtung, wobei die elektronische Vorrichtung eine Doppelverbindungsbetriebsart unterstützt, in der die elektronische Vorrichtung eine erste Kommunikationsverbindung mit einer ersten Netzvorrichtung aufbauen kann und eine zweite Kommunikationsverbindung mit einer zweiten Netzvorrichtung aufbauen kann, wobei sowohl die erste Netzvorrichtung als auch die zweite Netzvorrichtung eine Netzvorrichtung in einem ersten unselbstständigen 5G-NSA-Netz der fünften Generation ist, die erste Netzvorrichtung eine Basisstation 4G-eNB der vierten Generation ist; die zweite Netzvorrichtung eine Basisstation 5G-gNB der fünften Generation ist; ein Kernnetz des ersten 5G-NSA-Netzes ein Kernnetz NGC der nächsten Generation ist, die erste Netzvorrichtung mit der zweiten Netzverbindung in einer Kommunikationsverbindung steht und die erste Netzvorrichtung mit dem NGC in einer Kommunikationsverbindung steht, wobei das Steuerverfahren Folgendes umfasst:
Senden (201) einer Abfrageanforderung nach Betriebsmittelzuteilungsinformationen in Reaktion darauf, dass detektiert wird, dass sich die elektronische Vorrichtung in einem Abwärtsstrecken-Datendienstszenario befindet, an die erste Netzvorrichtung;
Empfangen (202) der Betriebsmittelzuteilungsinformationen von der ersten Netzvorrichtung; und
Bestimmen und Anzeigen (203) einer Ziel-Dienstkennung der elektronischen Vorrichtung basierend auf den Betriebsmittelzuteilungsinformationen;
wobei die Betriebsmittelzuteilungsinformationen einen ersten Netzbetriebsmittelblock der zweiten Netzvorrichtung umfassen; wobei das Bestimmen und Anzeigen (203) einer Ziel-Dienstkennung der elektronischen Vorrichtung basierend auf den Betriebsmittelzuteilungsinformationen Folgendes umfasst:
Bestimmen (303) eines Kanalqualitätsindikators der zweiten Netzvorrichtung in Reaktion auf den ersten Netzbetriebsmittelblock, der kleiner als ein erster Schwellenwert ist;
Bestimmen der Ziel-Dienstkennung als eine erste Dienstkennung, die der ersten Netzvorrichtung entspricht, und Anzeigen (304) der ersten Dienstkennung auf einer Anzeigeschnittstelle der elektronischen Vorrichtung in Reaktion auf den Kanalqualitätsindikator, der kleiner als ein zweiter Schwellenwert ist; und
Bestimmen der Ziel-Dienstkennung als eine zweite Dienstkennung, die der zweiten Netzvorrichtung entspricht, und Anzeigen der zweiten Dienstkennung auf der Anzeigeschnittstelle der elektronischen Vorrichtung in Reaktion auf den Kanalqualitätsindikator, der größer als der zweite Schwellenwert ist.

2. Verfahren nach Anspruch 1, wobei das Bestimmen (303) eines Kanalqualitätsindikators der zweiten Netzvorrichtung Folgendes umfasst:
Erfassen eines Kanalparameters und einer Signalstärke der zweiten Netzvorrichtung; und
Bestimmen des Kanalqualitätsindikators der zweiten Netzvorrichtung basierend auf dem Kanalparameter und der Signalstärke.

3. Verfahren nach Anspruch 1 oder Anspruch 2, wobei die erste Dienstkennung ein 4G-Icon ist, das eine Übertragungsform der Dienstdaten in einem 4G-Netz angibt, und die zweite Dienstkennung ein 5G-Icon ist, das eine Übertragungsform der Dienstdaten in einem 5G-Netz angibt.

4. Verfahren nach Anspruch 2, wobei der Kanalparameter wenigstens eines des Folgenden umfasst: eine Übertragungsgeschwindigkeit, einen Rauschabstand, eine Kanalverstärkung und eine Rauschleistung.

5. Verfahren nach einem der Ansprüche 1 bis 4, wobei der erste Netzbetriebsmittelblock von der zweiten Netzvorrichtung in Reaktion auf die Abfrageanforderung, die von der ersten Netzvorrichtung zu der zweiten Netzvorrichtung weitergeleitet wird, an die erste Netzvorrichtung gesendet wird.

6. Verfahren nach einem der Ansprüche 1 bis 5, wobei die Betriebsmittelzuteilungsinformationen wenigstens eines des Folgenden umfassen: einen Netzbetriebsmittelblock, eine Dateigröße und eine verfügbare Abwärtsstrecken-Bandbreite.

7. Verfahren nach Anspruch 1, das vor dem Senden (201) einer Abfrageanforderung nach Betriebsmittelzuteilungsinformationen an die erste Netzvorrichtung ferner Folgendes umfasst:
Ausführen eines Einschalt-Registrierungsprozesses in Reaktion auf ein Einschaltereignis, Empfangen von Netzbeschreibungsinformationen des 5G-NSA-Netzes, die von der ersten Netzvorrichtung gesendet werden, wobei die Netzbeschreibungsinformationen wenigstens einen Typ und eine Fähigkeit des NGC-Netzes umfassen; und
Bestimmen eines Satzes von Dienstkennungen der elektronischen Vorrichtung basierend auf den Netzbeschreibungsinformationen, wobei der Satz von Dienstkennungen die Ziel-Dienstkennung umfasst.

8. Elektronische Vorrichtung (500), **gekennzeichnet durch** Umfassen eines Prozessors (510), eines Speichers (520), einer Kommunikationsschnittstelle (530) und eines oder mehrerer Programme, wobei das eine oder die mehreren Programme in dem Speicher (520) gespeichert sind und konfiguriert sind, durch den Prozessor (510) ausgeführt zu werden, wobei die Programme eine Anweisung zum Ausführen der Operationen des Verfahrens nach einem der Ansprüche 1 bis 8 umfassen.

9. Computerlesbares Speichermedium, das konfiguriert ist, ein Computerprogramm zum Austauschen elektronischer Daten zu speichern, **dadurch gekennzeichnet, dass** das Computerprogramm einen Computer befähigt, das Verfahren nach einem der Ansprüche 1 bis 8 auszuführen.

## Revendications

1. Procédé de commande pour l'affichage d'un identifiant de service dans un dispositif électronique, le dispositif électronique admettant un mode double connexion dans lequel le dispositif électronique est capable d'établir une première connexion de communication avec un premier dispositif de réseau et est capable d'établir une deuxième connexion de communication avec un deuxième dispositif de réseau, chacun des premier dispositif de réseau et deuxième dispositif de réseau étant un dispositif de réseau dans un premier réseau non autonome, dit NSA, de 5^{e} génération, dite 5G, le premier dispositif de réseau étant un eNB station de base de 4^{e} génération, dite 4G ; le deuxième dispositif de réseau étant un gNB station de base de 5^{e} génération, dite 5G ; un coeur de réseau du premier réseau NSA 5G étant un coeur de réseau de la prochaine génération, dit NGC, le premier dispositif de réseau étant dans une connexion de communication avec le deuxième dispositif de réseau, et le premier dispositif de réseau étant dans une connexion de communication avec le NGC, le procédé de commande comprenant :
l'envoi (201), au premier dispositif de réseau, d'une requête d'interrogation portant sur des informations d'allocation de ressources, en réponse à la détection du fait que le dispositif électronique se trouve dans un scénario de service de données sur la liaison descendante ;
la réception (202), depuis le premier dispositif de réseau, des informations d'allocation de ressources ; et
la détermination et l'affichage (203) d'un identifiant de service cible du dispositif électronique sur la base des informations d'allocation de ressources ;
les informations d'allocation de ressources comprenant un premier bloc de ressources de réseau du deuxième dispositif de réseau ; la détermination et l'affichage (203) d'un identifiant de service cible du dispositif électronique sur la base des informations d'allocation de ressources comprenant :
la détermination (303) d'un indicateur de qualité de canal du deuxième dispositif de réseau, en réponse au fait que le premier bloc de ressources de réseau est inférieur à un premier seuil ;
la détermination de l'identifiant de service cible comme un premier identifiant de service correspondant au premier dispositif de réseau et l'affichage (304) du premier identifiant de service sur une interface d'affichage du dispositif électronique, en réponse au fait que l'indicateur de qualité de canal est inférieur à un deuxième seuil ; et
la détermination de l'identifiant de service cible comme un deuxième identifiant de service correspondant au deuxième dispositif de réseau et l'affichage du deuxième identifiant de service sur l'interface d'affichage du dispositif électronique, en réponse au fait que l'indicateur de qualité de canal est supérieur au deuxième seuil.

2. Procédé selon la revendication 1, dans lequel la détermination (303) d'un indicateur de qualité de canal du deuxième dispositif de réseau comprend :
l'acquisition d'un paramètre de canal et d'une intensité de signal du deuxième dispositif de réseau ; et
la détermination de l'indicateur de qualité de canal du deuxième dispositif de réseau sur la base du paramètre de canal et de l'intensité de signal.

3. Procédé selon la revendication 1 ou la revendication 2, dans lequel le premier identifiant de service est une icône 4G indiquant une forme de transmission de données de service en réseau 4G, et le deuxième identifiant de service est une icône 5G indiquant une forme de transmission de données de service en réseau 5G.

4. Procédé selon la revendication 2, dans lequel le paramètre de canal comprend : un débit de transmission et/ou un rapport signal/bruit et/ou un gain de canal et/ou une puissance de bruit.

5. Procédé selon l'une quelconque des revendications 1 à 4, dans lequel le premier bloc de ressources de réseau est envoyé du deuxième dispositif de réseau au premier dispositif de réseau, en réponse au transfert de la requête d'interrogation du premier dispositif de réseau au deuxième dispositif de réseau.

6. Procédé selon l'une quelconque des revendications 1 à 5, dans lequel les informations d'allocation de ressources comprennent : un bloc de ressources de réseau et/ou une taille de fichier et/ou une bande passante disponible sur la liaison descendante.

7. Procédé selon la revendication 1, comprenant en outre, avant l'envoi (201), au premier dispositif de réseau, d'une requête d'interrogation portant sur des informations d'allocation de ressources :
la réalisation d'un processus d'enregistrement à la mise sous tension en réponse à un événement de mise sous tension, la réception d'informations de description de réseau relatives au réseau NSA 5G envoyées depuis le premier dispositif de réseau, les informations de description de réseau comprenant au moins un type et une capacité du réseau NGC ; et
la détermination d'un ensemble d'identifiants de service du dispositif électronique sur la base des informations de description de réseau, l'ensemble d'identifiants de service comprenant l'identifiant de service cible.

8. Dispositif électronique (500), **caractérisé en ce qu'**il comprend un processeur (510), une mémoire (520), une interface de communication (530) et un ou plusieurs programmes, les un ou plusieurs programmes étant stockés dans la mémoire (520) et étant configurés pour être exécutés par le processeur (510) et les programmes comprenant une instruction pour réaliser les opérations du procédé selon l'une quelconque des revendications 1 à 8.

9. Support de stockage lisible par ordinateur, configuré pour stocker un programme d'ordinateur pour l'échange de données électroniques, **caractérisé en ce que** le programme d'ordinateur permet à un ordinateur d'exécuter le procédé selon l'une quelconque des revendications 1 à 8.
